(19) Europäisches Patentamt
European Patent Office
Office européen des brevets

(11) EP 4 361 223 A1

(12) **EUROPEAN PATENT APPLICATION**

(43) Date of publication:
**01.05.2024 Bulletin 2024/18**

(21) Application number: **23206435.2**

(22) Date of filing: **27.10.2023**

(51) International Patent Classification (IPC):
***C09D 5/30*** *(2006.01)* ***C09D 5/32*** *(2006.01)*
***C09D 7/40*** *(2018.01)* ***C09D 7/61*** *(2018.01)*
***B64D 7/00*** *(2006.01)* ***B64D 45/02*** *(2006.01)*

(52) Cooperative Patent Classification (CPC):
**C09D 5/30; B64D 7/00; B64D 45/02; C09D 5/32; C09D 7/61; C09D 7/70;** C08K 3/10; C08K 7/02

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **28.10.2022 DE 102022128629**

(71) Applicant: **Airbus Defence and Space GmbH**
**82024 Taufkirchen (DE)**

(72) Inventors:
- **DITTRICH, Kay Werner**
  **82024 Taufkirchen (DE)**
- **KARCH, Christian**
  **82024 Taufkirchen (DE)**
- **BLECKMANN, Matthias**
  **82024 Taufkirchen (DE)**
- **SCHUSTER, Thomas**
  **82024 Taufkirchen (DE)**

(74) Representative: **LKGLOBAL**
**Lorenz & Kopf Patentanwalt**
**Attorney at Law PartG mbB**
**Brienner Straße 11**
**80333 München (DE)**

(54) **COATING MATERIAL FOR A SURFACE OF AN AIRCRAFT WITH LIGHTNING PROTECTION**

(57) A coating material for a surface of an aircraft is proposed, having a polymer- or rubber-based dielectric matrix material, and first flakes of a metallic and/or soft-magnetic, electrically conductive material that are embedded into the matrix material, wherein the first flakes are geometrically two-dimensional and have a ratio of thickness to average diameter of 1:3 or less, and wherein the first flakes are separated from one another in the matrix material and/or have an electrically non-conductive coating.

4
6
11
10
11
11
8
12
14
2
Fig. 1

EP 4 361 223 A1

## Description

Technical field

The present description relates to a coating material for a surface of an aircraft and to an aircraft having at least one surface and a coating disposed thereon.

Technical background

Low-observable (LO) components on military aircraft and remote carriers are subject to the risk of lightning strikes in electrical storm conditions, for example at the leading edges of wings, at engine inlets and at empennages. A particular challenge in the design of such systems is to equip radar-absorbing materials and structures typically more or less with surface layers that are less conductive on the top side, with more conductive layers disposed beneath the surface. In the case of a lightning strike, the effect of this can be that the lightning penetrates the less conductive surface layers and the lightning current is diverted via the conductive layers beneath the surface. The high lightning currents that then flow through the structure lead to significant evolution of heat within the structure, which leads to thermal and mechanical damage over a large area of the LO components and in the supporting aircraft structure.

A conventional method of protecting a structure from damage by lightning strike is to increase the conductivity of the surface in order to divert the lightning current directly at the surface, for example by the application of expanded metal foils on the surface of the aircraft structure. This is not possible in the case of LO materials and structures since metallic structures would considerably impair the function of the radar absorber.

Radar-transparent lightning protection systems are known from radomes and antennas, for example segmented diverter strips which, in the case of sufficient electrical field strength, form a plasma duct for diversion of the lightning current. However, such diverter strips, depending on their installation, can impair the radar signature of the overall system. Furthermore, the efficiency of the diverter strips is greatly reduced by a film of water or accumulated ice.

Also known is the use of a strip coated with passivated, often spherical, aluminum powder, which forms a conductive pathway only in the event of sufficiently high electrical field strengths that occur immediately before a lightning strike. In lightning strike tests, however, it has been found that such a strip does not sufficiently provide the electrically conductive pathway if it is applied uniformly to a radar absorber, which can then lead to damage to the radar absorber, over a large area in some cases. As known from earlier studies, such aluminum particles do not sufficiently trigger the necessary flashover in order to create the conductive pathway for the lightning current which is required for diversion of the lightning energy applied.

Description

The problem addressed is that of proposing an alternative coating material for a surface of an aircraft, in which effective radar absorption is combined with effective lightning protection.

This problem is solved by the subject matter of independent claim 1. Further embodiments will be apparent from the dependent claims and from the description that follows.

A coating material for a surface of an aircraft is proposed, having a polymer- or rubber-based dielectric matrix material, and first flakes of a metallic or soft-magnetic, electrically conductive material that are embedded into the matrix material, wherein the flakes present in the coating material are geometrically two-dimensional and have a ratio of thickness to average diameter of 1:3 or less, and wherein the flakes present in the coating material are separated from one another in the matrix material and/or have an electrically non-conductive coating.

A first flake should be considered to be a two-dimensional, flake-shaped particle having a uniformly or nonuniformly shaped edge. It consists of a first material selectable according to particular criteria that will be described further hereinafter. The first flakes may quite possibly have different sizes and shapes that are within the same order of magnitude or are preferably similar. The word "first" should be understood such that a first type of flakes having particular properties is provided. It is conceivable optionally also to use second flakes that could have different or additional electromagnetic and/or mechanical properties. This will likewise be described further hereinafter.

The first flakes have been mixed into a suitable matrix material and applied to the surface of an LO material or of a structure. In some embodiments, the coating material is liquid or pasty in an original state, in order to apply it to the LO component in question. In some embodiments, the desired properties of the coating material can also be achieved directly in the LO component, in that the flakes are integrated in a suitable manner directly into an outward-facing layer of a composite material and into the matrix material thereof. A layer on top that covers the coating material of the invention, for example a rain erosion layer, is still not ruled out.

The flake-like metal particles are of much better suitability for the absorption of radar waves and have a higher infrared reflection capacity than the mutually separated spherical particles described above. Electromagnetic waves which propagate over the surface in question, for example in the form of electromagnetic surface waves, or reflected radar waves incident on the surface in question, are at least partly absorbed because of the flakes disposed in the surface layer. In particular, the amplitude of surface waves is significantly attenuated because of high transmagnetization losses in the first flakes. These losses are represented by the imaginary part of complex magnetic permeability $\hat{\mu}$, which is defined

by the relationship

$$\hat{\mu} = \mu_S' - j \cdot \mu_S''.$$

The aim is to choose the material of the first flakes such that the imaginary part $\mu_S''$, which indicates the size of the magnetic losses, as a material property is at a maximum. Elements are useful in principle, or compounds in which there are unpaired electrons in the electron configuration of the ground state. Among the elements or metals in pure form, these are iron, nickel and cobalt.

Because of the high surface area of the first flakes compared to metallic pellets, the infrared emission of the aircraft is still reduced by the coating material of the invention. The infrared radiation that arises because of heat within the aircraft is partly reflected back at the flakes and hence effectively retained. The material of the first flakes is preferably chosen so as to achieve maximum reflection in the infrared region. It is known, for example, that aluminum, gold or nickel can achieve very good reflection in the infrared region. By virtue of a particularly flat shape, especially a flat side of the first flakes that faces the structure of the aircraft, this effect is further enhanced.

Because of the length of the circumferential edge of a first flake which is much greater than a circumferential line of a metal pellet of comparable size, it is still possible for platelet-shaped particles, even given a distinctly lower electrical field strength, to trigger flashovers between adjacent and electrically mutually insulated flakes, by direct comparison with electrically conductive spherical structures. A lightning strike consequently gives rise very reliably to an electrically conductive pathway between adjacent first flakes, through which the lightning current is directed. Some of the first flakes could be connected to a suitable terminal point via which the lightning current is directed into a conductive structure of the aircraft.

The coating material of the invention accordingly permits a particularly effective combination of radar absorption, reduced infrared emission and improved lightning protection by virtue of conductive, metallic and/or soft-magnetic first flakes.

In an advantageous embodiment, the thickness of the flakes present in the coating material is within a range from 0.1 μm to 5 μm. Over and above a thickness of about 0.1 μm, significant magnetic losses can be achieved in order to attain the desired radar absorption.

In an advantageous embodiment, an average diameter of the flakes present in the coating material is within a range from 1 μm to 25 μm. In the aforementioned known coating material for lightning protection, metallic spherical structures having a diameter of about 2 to 8 μm are used. The average diameter of the flakes exceeds that. Because of a possibly noncircular shape of the flakes, however, the circumferential length thereof could significantly exceed the length of a circumferential line of the metallic pellets to a distinct degree. As a result, a better peak effect could result at the edges of the first flakes, which leads to improved flashover characteristics of the electrical field in order to achieve lightning protection.

In an advantageous embodiment, the flakes present in the coating material are aligned essentially parallel to the surface of the aircraft. In this way, in particular, a greatest possible reflection area with respect to the structure of the aircraft is provided, which further reduces infrared emission. A parallel alignment of the flakes relative to the surface also achieves better damping of the surface waves.

In an advantageous embodiment, a volume content of the flakes present in the coating material is within a range from 5% to 40% and preferably from 15% to 35%. In studies, it has been found that such a volume content is sufficient to achieve the desired properties. The size, the volume content and the material of the flakes that include the first flakes and optionally second flakes (see below) should be matched to one another such that the coating material has maximum radar absorption and enables sufficient lightning protection and reduction of infrared emission.

In an advantageous embodiment, the first flakes have an electrically insulating thin coating, which for example comprises silicon dioxide and/or aluminum oxide or ferrite-based materials. The electrically insulating coating can prevent through-contacting of the individual first flakes; the dielectric properties of the first flakes are altered in order to reduce the reflection of the electromagnetic waves and to increase the absorption of the electromagnetic waves.

In an advantageous embodiment, the material of the first flakes may include iron, nickel, zinc, cobalt, copper, magnesium, cadmium, barium, strontium, silicon, germanium, oxygen. The material of the first flakes may also include an alloy or an intermetallic compound of these elements. The first flakes could be produced, for example, from pure iron and given an electrically insulating coating. The coating and the embedding into the matrix material can prevent corrosion of the first flakes, with simultaneous achievability of high magnetic losses. It is further conceivable that the first flakes include not just a single material for achievement of the desired effect, but rather a first material for achievement of the magnetic losses and a second material that adjoins or surrounds the first material for achievement of reflection of infrared radiation in order to reduce the infrared emission level. It is conceivable, for example, that the first flakes are based on iron as first material and are coated with a different transition metal as second material.

In an advantageous embodiment, the coating material also includes second flakes of a metallic material that differs from the material of the first flakes and has an infrared emission level of not more than 0.2, where the second flakes are embedded into the matrix material together with the first flakes. The coating material could consequently include a mixture of two different types of flakes that together lead to improved lightning protection and reduced infrared emission. The infrared emission level may generally assume values between 0 and 1. The choice of the material of the second flakes such that an infrared emission level of 0.2 or less is achieved can achieve particularly good reduction of infrared emission. It is conceivable that the second flakes include elements such as, for example, aluminum, chromium, or coatings with zinc, copper, silver, aluminum and semiconductor compounds inter alia. The use of second flakes may be considered when the infrared emission level of the coating material with first flakes can be lowered by addition of second flakes.

The invention further relates to an aircraft having at least one component having a surface, wherein the surface of the at least one component includes a coating material according to the above description. It is conceivable to provide only parts of the aircraft with the coating material of the invention. It is also conceivable that different regions of the aircraft are equipped with different versions of the coating material. For example, it would be possible for the material of the first flakes in some regions to differ from that in other regions. In addition, it would be possible to employ different contents by volume. This may of course depend on the type and intended purpose of the aircraft.

In an advantageous embodiment, the surface has two or more sections, where the coating material in at least one of the sections has a different pattern and/or a different proportion by volume than in another section. The use of a particular pattern of flakes incorporated into the matrix material can allow local controlled adjustment of the radar absorption or infrared emission properties. It would be possible here, for example, to direct emphasis onto the reduction of infrared emissions in regions having particularly significant exposure to infrared emission.

In an advantageous embodiment, some of the first flakes are connected to ground by at least one electrical terminal point. The electrical terminal point could be connected to an electrically conductive structure within the aircraft, such that the lightning current is diverted from the surface of the aircraft to the conductive structure and the surface is protected from damage. It is conceivable to distribute a multitude of electrical terminal points over the surface, such that a lightning strike has to cover a minimum distance for diversion to a closest electrical terminal point.

In an advantageous embodiment, in addition, the at least one component (2) is a low-observable (LO) component.

Brief description of the figures

Working examples are discussed in detail hereinafter with reference to the appended drawings. The diagrams are schematic and not true to scale. Identical reference numerals relate to identical or similar elements. The figures show:

Fig. 1 a schematic diagram of a cross section of a component having a surface and a coating material present at the surface in one working example.

Fig. 2 a schematic diagram of the cross section from fig. 1 with a lightning strike hitting the coating material.

Fig. 3 a detail diagram of the coating material.

Fig. 4 an aircraft having a coating material on at least one component.

Detailed description of working examples

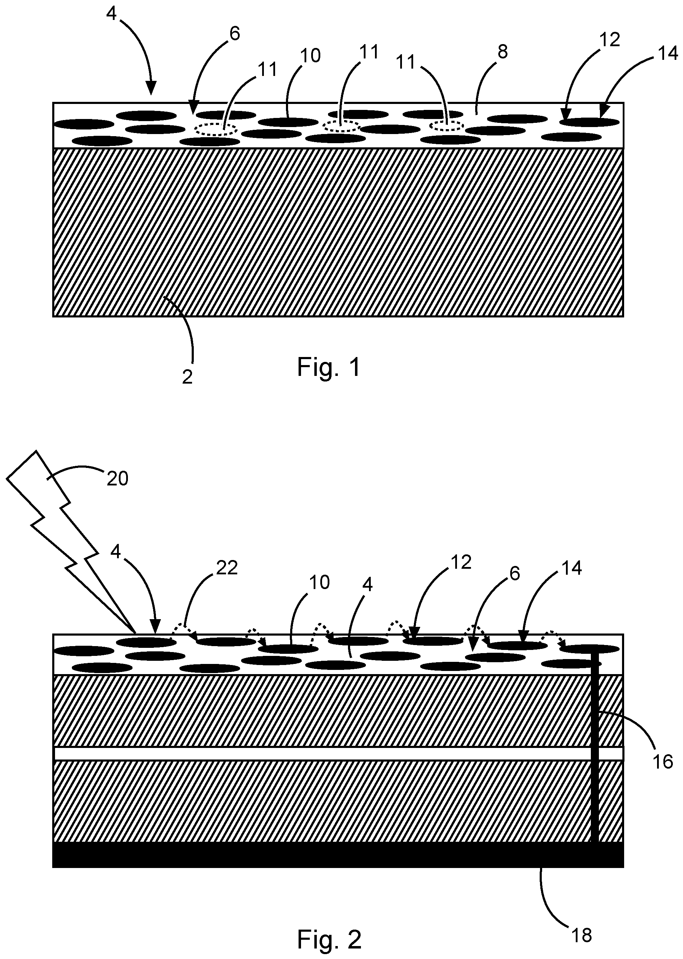

Fig. 1 shows a component 2 of an aircraft in a schematic part-section diagram. The component 2 could be formed from a fiber composite material, for example a carbon fiber-reinforced plastic. A surface 4 has a coating material 6 that comprises a polymer- or rubber-based dielectric matrix material 8, into which are embedded first flakes 10 of a metallic and/or soft-magnetic, electrically conductive material. The first flakes 10 are flat and have a ratio of thickness to average diameter of 1:3 or less. It would optionally also be possible to additionally incorporate second flakes 11 that are shown here by dotted lines. These could consist of a metallic material or an alloy other than the material of the first flakes 10.

The flakes 10 and optionally 11 are distributed randomly in the matrix material 8 and could form a content by volume in the coating material 6 within a range from 5% to 40% and preferably from 20% to 35%. This means that the flakes 10 and optionally 11 in the total volume of the coating material 6 have a proportion of preferably 25% to 35%.

The average diameter of the flakes 10 and optionally 11 is within a range from 1 $\mu$m to 25 $\mu$m. The thickness thereof starts by way of example at 0.1 $\mu$m. The flakes 10 and optionally 11 are preferably aligned parallel to the surface 4. Thermal radiation which is emitted outward from the interior of the aircraft 2 is reflected inward by the first flakes 10 and/or the second flakes 11, if provided. The infrared emission of the aircraft 2 is significantly reduced as a result.

The metallic or soft-magnetic material can additionally achieve improved radar absorption compared to the use of metallic pellets since the surface area of the individual first flakes 10 is much greater than the surface area of customarily used metal pellets that could have a diameter over and above 1 $\mu$m. The material of the first flakes 10 is preferably selected such that maximum magnetic losses are provided, especially for surface waves, and a high reflection capacity for infrared waves is simultaneously achieved.

The flakes 10 and optionally 11 have irregularly shaped edges 12 and are spaced apart from one another in the matrix material 8. They consequently do not form a coherent electrically conductive ply or layer, but are insulated from one another in an electrically neutral state. For this purpose, in particular, the first flakes 10 may also have a coating 14. In the case of iron-based first flakes 10, it would thus also be possible to achieve corrosion protection.

As indicated in fig. 2, the first flakes 10 extend to one or more terminal points 16 that are electrically connected to a structure 18 in the aircraft. If a lightning strike 20 hits the surface 4, the locally high electrical field strength causes a flashover 22 between adjacent first flakes 10, giving rise to a conductive pathway via which the lightning current can be transported to the next terminal point 16 onto the structure 18.

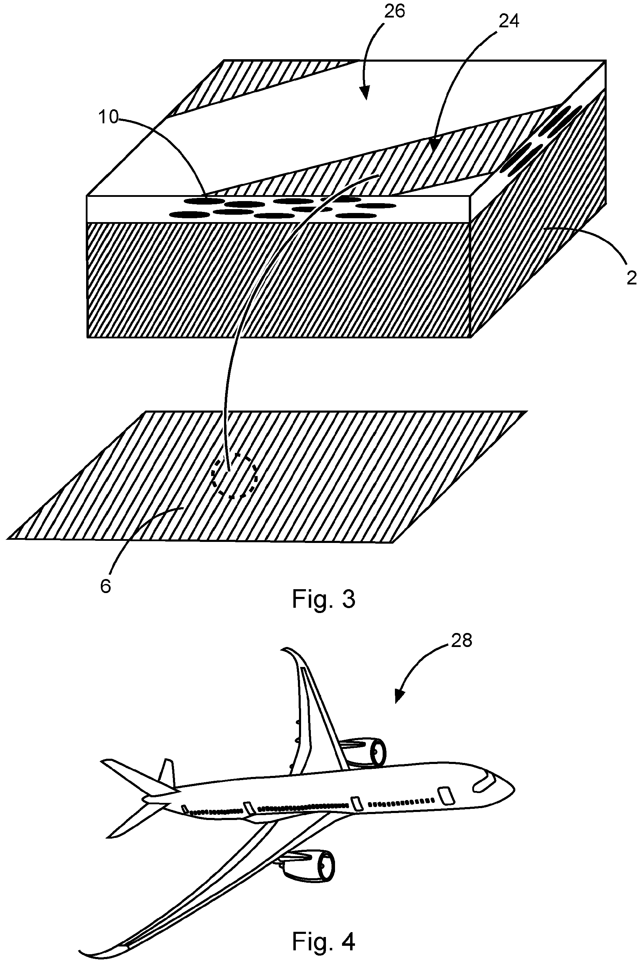

Fig. 3 shows the surface 4, which is divided into multiple sections 24 and 26. In order to further improve flashover between the first flakes 10 at low field strength, it is possible to set up a pattern of sections 24 enriched with first flakes 10 and sections 26 without first flakes 10 on the surface 4. These patterns are preferably in accordance with the demands on camouflaging of the aircraft. The pattern may be formed either by applying the coating material comprising first flakes 10 or by applying first flakes solely to the sections 24. The patterns may be linear or curved, regular or irregular, or, if required, may be connected to form a network.

Fig. 4, finally, shows an example of an aircraft 28 comprising multiple components 30 that can be provided with a coating material 6 of the invention.

It should additionally be pointed out that "comprising" or "having" do not rule out other elements or steps, and "a" does not rule out a multitude. Furthermore, it should be pointed out that features or steps that have been described with reference to one of the above working examples can also be used in combination with other features or steps of other above-described working examples. Reference numerals in the claims should not be regarded as a restriction.

List of reference numerals

2 component
4 surface
6 coating material
8 matrix material
10 first flakes
11 second flakes
12 edge
14 coating
16 terminal point
18 structure
20 lightning strike
22 flashover
24 section (with first flakes)
26 section (without first flakes)

**Claims**

**1.** A coating material (6) for a surface (4) of an aircraft, having:

a polymer- or rubber-based dielectric matrix material (8), and
first flakes (10) of a metallic and/or soft-magnetic, electrically conductive material that are embedded into the matrix material (8),
wherein the flakes (10) present in the coating material are geometrically two-dimensional and have a ratio of thickness to average diameter of 1:3 or less, and
wherein the flakes (10) present in the coating material are separated from one another in the matrix material (8) and/or have a non-conductive coating.

**2.** The coating material (6) as claimed in claim 1, wherein the thickness of the flakes (10, 11) present in the coating material is within a range from 0.1 $\mu$m to 5 $\mu$m.

**3.** The coating material (6) as claimed in claim 1 or 2, wherein an average diameter of the flakes (10, 11) present in the coating material is within a range from 1 $\mu$m to 25 $\mu$m.

**4.** The coating material (6) as claimed in any of the preceding claims,
wherein the flakes (10, 11) present in the coating material are aligned essentially parallel to the surface (4) of the aircraft.

**5.** The coating material (6) as claimed in any of the preceding claims,
wherein a content by volume of the flakes (10, 11) present in the coating material is within a range from 5% to 40% and preferably from 20% to 35%.

**6.** The coating material (6) as claimed in any of the preceding claims,
wherein the first flakes (10) have an electrically insulating coating (14) comprising silicon dioxide and/or aluminum oxide.

**7.** The coating material (6) as claimed in any of the preceding claims,
wherein the material of the first flakes (10) includes the elements iron, nickel, zinc, cobalt, copper, magnesium, cadmium, barium, strontium, silicon, germanium, oxygen, and/or an alloy or an intermetallic compound of these elements.

**8.** The coating material (6) as claimed in any of the preceding claims,

further comprising second flakes (11) of a metallic material that differs from the material of the first flakes and has an infrared emission level of not more than 0.2, and
wherein the second flakes (11) are embedded into the matrix material (8) together with the first flakes (10).

**9.** An aircraft having at least one component (2) having a surface (4), wherein the surface (4) of the at least one component (2) includes a coating material (6) as claimed in any of claims 1 to 8.

**10.** The aircraft as claimed in claim 9,

wherein the surface (4) has two or more sections (24, 26), and
wherein the coating material (6) in at least one of the sections (24, 26) has a different pattern and/or a different proportion by volume than in another section (24, 26).

**11.** The aircraft as claimed in claim 9 or 10,
wherein some of the first flakes (10) are connected to ground by at least one electrical terminal point (16).

**12.** The aircraft as claimed in any of claims 9 to 11,
wherein the at least one component (2) is a low-observable (LO) component.

4
6
11
10
11
11
8
12
14
2

Fig. 1

20
4
22
10
4
12
6
14
16
18

Fig. 2

26
24
10
2
6
28

Fig. 3

Fig. 4

Europäisches
Patentamt
European
Patent Office
Office européen
des brevets

# EUROPEAN SEARCH REPORT

Application Number
EP 23 20 6435

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>A | WO 2020/244994 A1 (BASF SE [DE]) 10 December 2020 (2020-12-10)<br>* page 4, line 28 - line 29 *<br>* page 4, line 9 - line 10 *<br>* page 5, line 22 - line 24 *<br>* page 5, line 27 - line 29 *<br>* claims 1-15 * | 1-5,7,8<br>6 | INV.<br>C09D5/30<br>C09D5/32<br>C09D7/40<br>C09D7/61<br>B64D7/00<br>B64D45/02 |
| X | US 2003/008131 A1 (PARIS HENRY G [US] ET AL) 9 January 2003 (2003-01-09)<br>* paragraphs [0007] - [0012] *<br>* paragraph [0013] *<br>* paragraph [0029] - paragraph [0031] *<br>* paragraph [0042] - paragraph [0043] *<br>* figure 1 *<br>* claims 1-43 * | 1-12 | |
| A | EP 3 703 479 A1 (NANOEMI SP Z O O [PL]) 2 September 2020 (2020-09-02)<br>* paragraphs [0023] - [0024] *<br>* claims 1-13 * | 1-12 | TECHNICAL FIELDS SEARCHED (IPC) |
| A | US 2009/226673 A1 (FRIEDERSDORF FRITZ J [US] ET AL) 10 September 2009 (2009-09-10)<br>* paragraph [0004] - paragraph [0006] *<br>* paragraph [0045] - paragraph [0050] *<br>* claims 1-39 * | 1-12 | C09D<br>C09G |
| A | EP 0 065 207 A1 (HERBERTS & CO GMBH [DE]) 24 November 1982 (1982-11-24)<br>* claims 1-10 * | 1-12 | |
| A | US 2003/235709 A1 (HERRON DALE P [US]) 25 December 2003 (2003-12-25)<br>* paragraph [0001] *<br>* paragraph [0035] *<br>* claims 1-50 * | 1-12 | |

The present search report has been drawn up for all claims

1

| Place of search | Date of completion of the search | Examiner |
|---|---|---|
| Munich | 27 February 2024 | Siemsen, Beatrice |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 23 20 6435

This annex lists the patent family members relating to the patent documents cited in the above-mentioned European search report. The members are as contained in the European Patent Office EDP file on
The European Patent Office is in no way liable for these particulars which are merely given for the purpose of information.

27-02-2024

| Patent document cited in search report | Publication date | Patent family member(s) | Publication date |
|---|---|---|---|
| WO 2020244994 A1 | 10-12-2020 | CA 3142644 A1 | 10-12-2020 |
| | | CN 113924332 A | 11-01-2022 |
| | | EP 3980487 A1 | 13-04-2022 |
| | | JP 2022536110 A | 12-08-2022 |
| | | KR 20220018568 A | 15-02-2022 |
| | | US 2022200158 A1 | 23-06-2022 |
| | | WO 2020244994 A1 | 10-12-2020 |
| US 2003008131 A1 | 09-01-2003 | US 2003008131 A1 | 09-01-2003 |
| | | WO 03004202 A1 | 16-01-2003 |
| EP 3703479 A1 | 02-09-2020 | AU 2020201098 A1 | 17-09-2020 |
| | | BR 102020003875 A2 | 24-11-2020 |
| | | CA 3073670 A1 | 28-08-2020 |
| | | CN 111621072 A | 04-09-2020 |
| | | EP 3703479 A1 | 02-09-2020 |
| | | ES 2939245 T3 | 20-04-2023 |
| | | JP 2020143275 A | 10-09-2020 |
| | | KR 20200105625 A | 08-09-2020 |
| | | PL 3703479 T3 | 20-03-2023 |
| | | US 2020276797 A1 | 03-09-2020 |
| US 2009226673 A1 | 10-09-2009 | NONE | |
| EP 0065207 A1 | 24-11-1982 | AT E14746 T1 | 15-08-1985 |
| | | DE 3118256 A1 | 02-12-1982 |
| | | EP 0065207 A1 | 24-11-1982 |
| US 2003235709 A1 | 25-12-2003 | NONE | |

EPO FORM P0459

For more details about this annex : see Official Journal of the European Patent Office, No. 12/82